# FASCICULE DE BREVET EUROPEEN

(11) **EP 1 249 947 B1**
(45) Date de publication et mention de la délivrance du brevet: **15.11.2006**
(21) Numéro de dépôt: 02290837.0
(22) Date de dépôt: 04.04.2002
(51) Int. Cl.: H04B 1/713

(54) **Procédé et dispositif d'émission/réception à sauts de fréquence**
Verfahren und Vorrichtung zum Senden und empfangen mit Frequenzsprung
Method and apparatus for transmission/reception using frequency hopping

(30) Priorité: 10.04.2001 FR 0105153
(43) Date de publication de la demande: 16.10.2002
(73) Titulaire: Mitsubishi Electric Information Technology Centre Europe B.V., 1119 NS Schiphol Rijk (NL)
(72) Inventeur: Rambaud, Luc, Mitsubishi Electricité, 35700 Rennes (FR)
(74) Mandataire: Maillet, Alain

(56) Documents cités:
- EP-A- 0 785 637
- WO-A-96/35265
- US-A- 5 528 623

## Description

La présente invention concerne de manière générale un procédé et un dispositif d'émission à sauts de fréquence ainsi qu'un procédé et un dispositif de réception correspondants. La présente invention s'applique plus particulièrement à des émetteurs/ récepteurs de systèmes de télécommunication à sauts de fréquence.

Le système de télécommunication Bluetooth est une interface radio universelle à faible coût destinée à remplacer les liaisons filaires ou infrarouge entre différents appareils informatiques ou électroniques. Ce système opère dans une bande de fréquence autour de 2.4 GHz et utilise une modulation par sauts de fréquence. Plus précisément, lors d'une connexion entre deux entités Bluetooth, les données sont transmises sous forme de blocs, les données d'un bloc étant transmises à une radio-fréquence fixée pour toute la durée de transmission dudit bloc, les radio-fréquences se succédant selon un schéma pseudo-aléatoire.

Par ailleurs, la multiplicité des normes de téléphonie mobile, GSM, EDGE, UMTS, pour n'en citer que quelques unes, a fait naître le besoin d'une plate-forme radio universelle et programmable (Software Defined Radio), capable d'être configurée à la demande pour tel ou tel type de système. Typiquement, une telle plate-forme est constituée d'un microprocesseur ou d'un processeur DSP, de circuits programmables FPGA (Field Programmable Gate Array), de circuits ASIC présentant une grande flexibilité de configuration, ainsi que de convertisseurs ADC et DAC. Elle se divise en une partie numérique et une partie analogique. La partie numérique est généralement chargée, à l'émission, de la modulation et de la translation de fréquence de la bande base ou de la fréquence intermédiaire à une radio-fréquence (RF) et de l'opération inverse à la réception. La partie analogique est essentiellement chargée, à l'émission, de la conversion numérique-analogique et, réciproquement, à la réception, de la conversion analogique-numérique. La réalisation d'un système à sauts de fréquence au moyen d'une plate-forme radio est délicate car le circuit de synthèse de fréquence (DDS ou Direct Digital Synthesizer), chargé de la génération de fréquence RF, ne permet pas de passer instantanément d'une valeur de fréquence RF à une autre. Un certain temps de stabilisation doit en effet être respecté. En outre, la présence de filtres interpolateurs à l'émission et décimateurs à la réception dont les caractéristiques dépendent des fréquences utilisées, rend difficile de programmer une transition de fréquence sur une donnée bien déterminée.

Le problème à la base de invention est de proposer une plate-forme radio permettant d'implémenter un système d'émission/ réception à sauts de fréquence universel, qui ne présente pas les inconvénients précités.

Le problème est résolu par invention définie comme un procédé de transmission de données se présentant sous la forme d'une suite de blocs, chaque bloc de données étant soumis à une conversion de fréquence pour être transmis à une fréquence porteuse, selon lequel, lorsqu'un premier bloc de données destiné à être transmis à une première fréquence porteuse est suivi d'un second bloc de données destiné à être transmis à une seconde fréquence porteuse, l'on insère une séquence de données de bourrage entre le premier bloc et le second bloc, la conversion de fréquence passant d'une conversion à la première fréquence porteuse à une conversion à la seconde fréquence porteuse lorsque ladite conversion de fréquence opère sur lesdites données de bourrage.

Selon une première variante, les données de bourrage sont insérées sous la forme d'un bloc de bourrage entre lesdits premier et second blocs.

Selon une seconde variante, les données de bourrage sont concaténées, comme suffixe, au premier bloc.

Selon une troisième variante, les données de bourrage sont concaténées, comme préfixe, au second bloc.

Le procédé peut comprendre un premier processus d'écriture dans un buffer de type FIFO et un second processus de lecture de ce buffer, le premier et le second processus opérant de manière asynchrone. Le premier processus écrit un bloc de données lorsqu'un drapeau indique que le buffer est presque vide, puis change la valeur du drapeau et recommence. Le second processus, quant à lui, lit une donnée du buffer, lève ledit drapeau si le buffer est presque vide, puis recommence.

Selon la première variante, un bloc de données de bourrage est écrit dans le buffer si le bloc suivant doit être transmis à une fréquence porteuse différente de la fréquence porteuse courante.

Selon la seconde variante, un suffixe de bourrage est concaténé au bloc précédant le premier bloc devant être transmis à une fréquence porteuse différente de la fréquence porteuse courante et le bloc ainsi concaténé est écrit dans le buffer.

Selon la troisième variante, un préfixe de bourrage est concaténé à un bloc de données si celui-ci doit être transmis à une fréquence porteuse différente de la fréquence porteuse courante .

L'invention est également définie par un dispositif d'émission adapté à transmettre des données se présentant sous la forme d'une suite de blocs et comprenant des moyens pour mettre en oeuvre le procédé exposé ci-dessus.

Il comprend avantageusement un buffer de type FIFO adapté à recevoir des blocs de données à transmettre, un convertisseur de fréquence adapté à transposer les données lues dudit buffer à une fréquence porteuse, un synthétiseur de fréquence fournissant une horloge à la fréquence porteuse audit convertisseur, des moyens d'insertion de données de bourrage, un organe de contrôle adapté à commander aux dits moyens d'insertion d'insérer des données de bourrage entre deux blocs de données à transmettre et à commander au synthétiseur de fréquence un changement de fréquence porteuse.

L'invention est encore définie par un procédé de réception de données émises par un dispositif d'émission à sauts de fréquence et se présentant sous la forme d'une suite de blocs, chaque bloc ayant été transmis à une fréquence porteuse étant converti en bande de base au moyen d'une conversion de fréquence, un premier bloc de données, dites utiles, transmis à une première fréquence porteuse, étant séparé d'un second bloc de données utiles, transmis à une seconde fréquence porteuse, par une séquence de données de bourrage. Selon ce procédé, l'on détecte à la réception une transition entre données utiles et données de bourrage et que, si une telle transition est détectée, la conversion de fréquence passe d'une conversion à partir de la première fréquence porteuse à une conversion à partir de la seconde fréquence porteuse lorsque ladite conversion de fréquence opère sur lesdites données de bourrage.

Avantageusement, le procédé comprend un premier processus d'écriture dans un buffer de type FIFO et un second processus de lecture de ce buffer, le premier et le second processus opérant de manière asynchrone. Le premier processus lève un drapeau lorsque le buffer est presque plein, puis recommence. Le second processus, quant à lui, lit un bloc de données lorsque ledit drapeau indique que le buffer est presque plein, change la valeur du drapeau, puis recommence.

Le second processus détermine le début du second bloc utile après avoir détecté une transition entre données utiles et données de bourrage et met à jour à chaque lecture suivante, la longueur du bloc utile courant restant à lire.

L'invention concerne enfin un dispositif de réception adapté à recevoir des données émises par un dispositif d'émission à sauts de fréquence et se présentant sous la forme de blocs de données utiles, entrecoupés ou non par des séquences de données de bourrage, ledit dispositif comprenant des moyens pour mettre en oeuvre le procédé tel qu'exposé ci-dessus.

Avantageusement, le dispositif comprend un buffer de type FIFO adapté à recevoir lesdites données, un convertisseur de fréquence opérant à une fréquence de travail et adapté à convertir les données lues dudit buffer en un signal en bande de base, un synthétiseur de fréquence fournissant audit convertisseur de fréquence un signal à ladite fréquence de travail, des moyens adaptés à détecter une transition entre données utiles et données de bourrage et un organe de contrôle adapté à commander audit synthétiseur de fréquence un changement de la fréquence de travail lorsqu'une telle transition est détectée.

Les caractéristiques de l'invention mentionnées ci-dessus, ainsi que d'autres, apparaîtront plus clairement à la lecture de la description faite en relation avec les dessins joints, parmi lesquels :
La Fig. 1 représente schématiquement une plate-forme radio utilisant un dispositif d'émission à sauts de fréquence selon un mode de réalisation de l'invention ;
La Fig. 2 représente schématiquement une plate-forme radio utilisant un dispositif de réception à sauts de fréquence selon un mode de réalisation de l'invention ;
Les Figs. 3a à 3d représentent l'état du buffer d'émission en différents instants et selon différentes variantes de réalisation de l'invention ;
La Fig. 4 représente différents états possibles du buffer de réception ;
La Fig. 5 représente un organigramme du procédé de réception selon un mode de réalisation de l'invention.

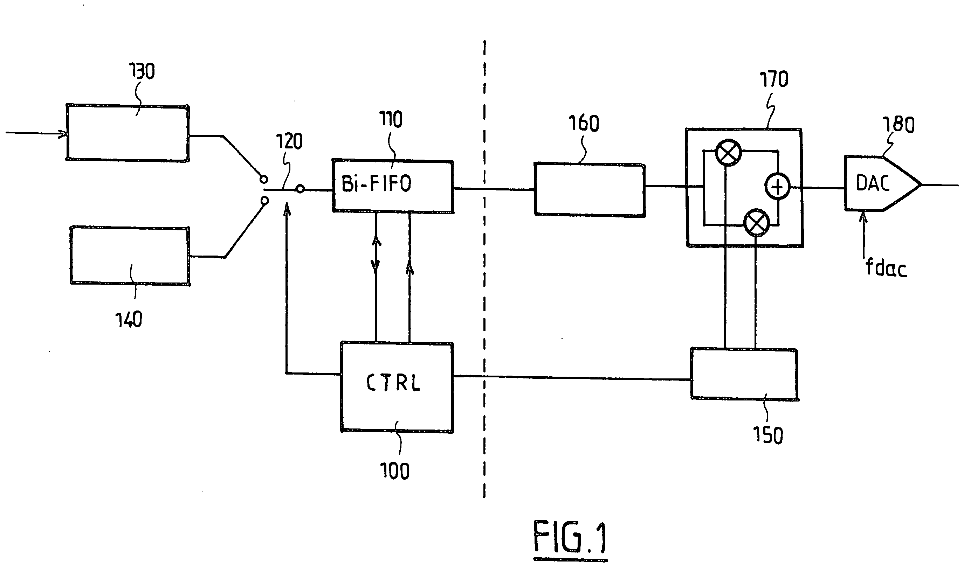

Le système illustré en Fig. 1 illustre schématiquement l'implémentation d'un émetteur à sauts de fréquence, par exemple d'un émetteur Bluetooth, au moyen d'une plate-forme radio. Cette plate-forme est divisée en deux modules indépendants travaillant de manière asynchrone, comme indiqué par la ligne en traits interrompus. Le module de gauche est entièrement numérique et est chargé de la transformation bits à symboles. Le module de droite, dit module de restitution, assure quant à lui la translation de fréquence à la fréquence porteuse.

Le module numérique comprend un modulateur 130 transformant des données codées NRZ à transmettre en symboles complexes (I,Q). Avantageusement, le modulateur 130 sera un modulateur GFSK (Gaussian Frequency Shift Keying) dans le cas d'un émetteur Bluetooth. Les symboles complexes fournis par le modulateur 130 seront désignés par la suite sous le nom de « données utiles ». Celles-ci sont stockées sous forme de blocs de longueur prédéterminée dans un buffer 110 utilisant une mémoire Bi-FIFO. On rappelle qu'une mémoire Bi-FIFO est une mémoire de type FIFO (First In First Out) à double port d'accès en lecture et en écriture. Le buffer se remplit par l'écriture de données utiles issues du module numérique et se vide lors de la lecture par le module de restitution. Comme nous le verrons en détail plus loin, des données de bourrage 140 peuvent être insérées entre blocs de données utiles au moyen du multiplexeur 120. Données utiles et données de bourrage sont alors écrites dans le buffer Bi-FIFO et lues par le module de restitution. Un drapeau AEF (Almost Empty Flag) indique l'état de remplissage du buffer. Plus précisément, lorsque le buffer est presque vide, c'est-à-dire lorsque la taille de la pile des données stockées est plus faible qu'une valeur de seuil prédéterminée, le drapeau AEF (Almost Empty Flag) est levé. Un organe de contrôle 100 pilote l'ensemble du module numérique. En particulier, l'organe de contrôle peut lire ou changer la valeur du drapeau AEF, modifier l'état du multiplexeur 120, commander l'écriture de données utiles ou de bourrage dans le buffer 110. En outre, l'organe de contrôle 100 ordonne au module de restitution les sauts de radio-fréquence.

Le module de restitution comprend un filtre interpolateur 160 dans lequel les échantillons I et Q des symboles complexes sont interpolés et un convertisseur de fréquence 170 recevant deux horloges en quadrature à la fréquence porteuse f₀ issues d'un générateur DDS (Direct Digital Synthetiser) 150. La valeur de la fréquence porteuse f₀ est déterminée par l'organe de contrôle 100. Le convertisseur de fréquence 170 translate la fréquence du signal représenté par les échantillons en bande de base à la fréquence porteuse. Le signal numérique ainsi obtenu est ensuite converti en signal analogique au moyen du convertisseur numérique/ analogique 180. Notons que le filtre interpolateur 160, le synthétiseur de fréquence 150 et le convertisseur de fréquence 170 sont des circuits numériques. Dans une variante de réalisation, les fonctions d'interpolation, de synthèse de fréquence et de conversion de fréquence peuvent être prises en charge par un processeur du module numérique, le module de restitution se limitant alors à la conversion numérique/ analogique.

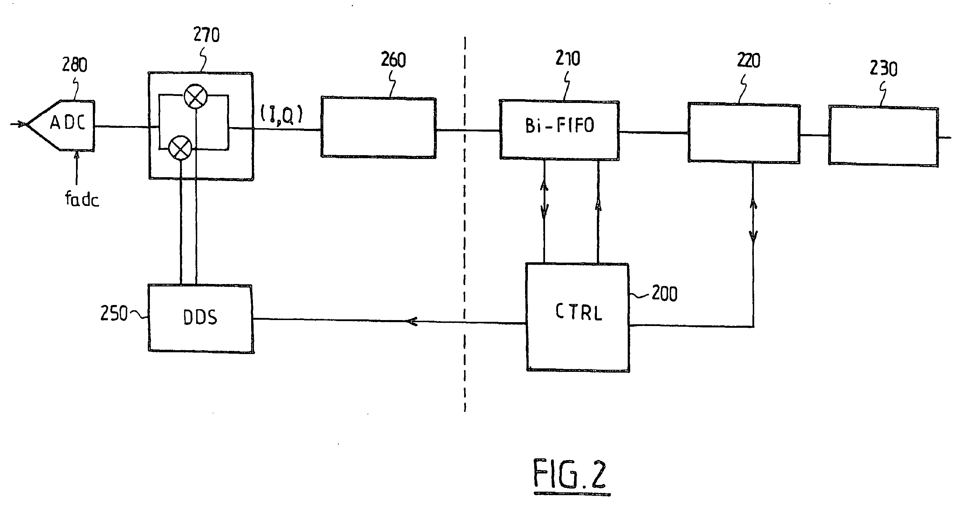

Le système illustré en Fig. 2 illustre schématiquement l'implémentation d'un récepteur à sauts de fréquence, par exemple d'un récepteur Bluetooth, au moyen d'une plate-forme radio. Cette plate-forme est divisée en deux modules indépendants, travaillant de manière asynchrone, comme indiqué par la ligne en traits interrompus. Le module de gauche, dit module d'acquisition, assure la conversion analogique/ numérique et la translation de fréquence en bande de base. Le module de droite, dit module numérique, est chargé de la transformation symboles à bits, par exemple au moyen d'un démodulateur GFSK si un modulateur GFSK a été utilisé à l'émission. Le module numérique peut encore assurer d'autres fonctionnalités connues en soi, comme la synchronisation de blocs, la détection et la correction d'erreurs, etc.

Le module d'acquisition comprend un convertisseur analogique/numérique 280, un convertisseur de fréquence 270 effectuant la conversion du signal radio-fréquence issu du convertisseur 280 en un signal en bande de base. Un synthétiseur de fréquence 250 fournit au convertisseur de fréquence 270 deux horloges en quadrature à la fréquence porteuse (radio-fréquence) f₀. Les échantillons complexes issus du convertisseur de fréquence 270 sont décimés dans le décimateur 260 avant d'être écrits dans le buffer Bi-FIFO 210. Le buffer se remplit lors de l'écriture de données issues du module d'acquisition et se vide lors de leur lecture par le module numérique. Un drapeau AFF (Almost Full Flag) indique l'état de remplissage du buffer. Plus précisément, lorsque le buffer est presque plein, c'est-à-dire lorsque la taille de la pile des données stockées est plus grande qu'une valeur de seuil prédéterminée, le drapeau AFF est levé. Un module 220 en sortie du buffer 210 est chargé de détecter le début d'un bloc de données utiles et d'éliminer les données de bourrage. Les données utiles sont ensuite converties en bits par le démodulateur 230, par exemple un démodulateur GFSK. Un organe de contrôle 200 pilote l'ensemble du module numérique. En particulier, l'organe de contrôle peut lire ou changer la valeur du drapeau AFF, commander la lecture de données dans le buffer 210, ordonner au module 220 une recherche de début d'un bloc de données utiles. L'organe de contrôle 200 détermine également la valeur de la fréquence porteuse générée par le synthétiseur 250. Notons là aussi que le filtre décimateur 260, le synthétiseur de fréquence 250 et le convertisseur de fréquence 270 sont des circuits numériques. Dans une variante de réalisation, les fonctions de translation de fréquence, de synthèse de fréquence et de décimation peuvent être prises en charge par un processeur du module numérique, le module d'acquisition se limitant alors à la conversion analogique/ numérique.

Revenons maintenant au fonctionnement de la plate-forme radio de la Fig. 1. Le buffer est vidé par le module de restitution selon le processus cyclique suivant :
- une donnée est lue du buffer 110 et fournie au filtre interpolateur 160 ;
- si le buffer est presque vide, le drapeau AEF est mis à 1 ;
- on retourne à la première étape .
De manière similaire, en l'absence de sauts de fréquence, le buffer est rempli selon le processus cyclique suivant:
- un bloc de données utiles est généré par modulateur 130 ;
- l'organe de contrôle 100 attend que le drapeau AEF soit à 1 ;
- lorsque le drapeau AEF est à 1, l'organe de contrôle 100 autorise l'écriture du bloc de données utiles dans le buffer 110 ;
- le drapeau AEF est mis à 0 et l'on retourne à la première étape.
Le processus de remplissage et celui de vidage sont asynchrones et communiquent simplement au moyen du drapeau AEF.
L'idée générale à la base de l'invention est d'insérer un bloc de données de bourrage lorsqu'un saut de fréquence doit intervenir, de manière à ce que ces données de bourrage soient présentes dans le convertisseur de fréquence 170 lors du passage et la stabilisation à la nouvelle fréquence. Le processus de vidage du buffer reste inchangé, mais celui de remplissage doit être modifié, comme nous allons le voir, pour insérer les données de bourrage.

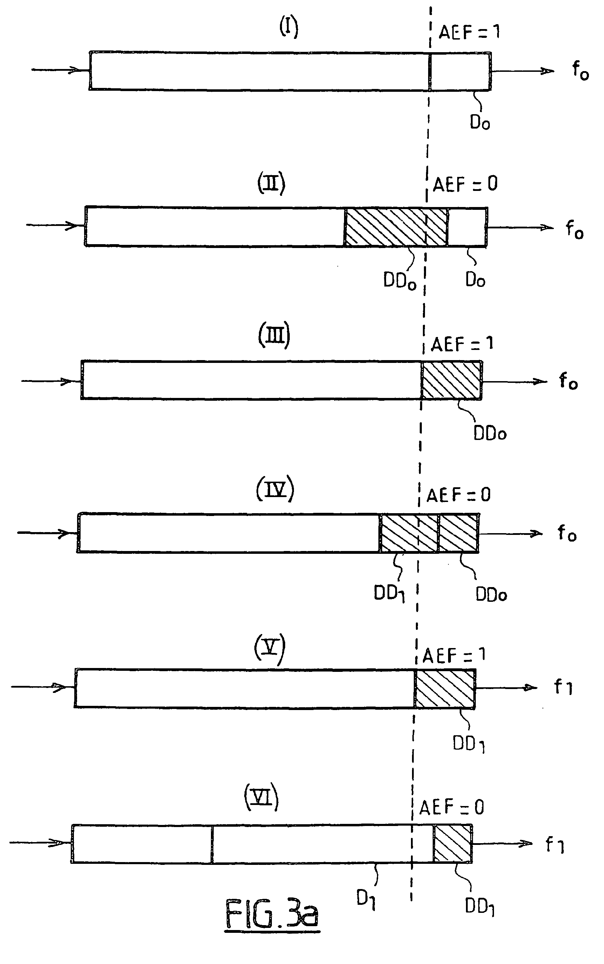

La Fig. 3a illustre une première variante de réalisation de l'invention. Le contenu du buffer 110 y est schématiquement représenté en des instants successifs. L'instant (I) correspond au moment où le drapeau AEF vient de passer à 1. La fin d'un bloc utile D₀ est présente dans le buffer. La fréquence porteuse (radio-fréquence) choisie pour émettre les données du bloc D₀ est f₀. Si l'émetteur a programmé un changement de fréquence pour le bloc utile suivant, un premier bloc de bourrage DD₀ est d'abord écrit dans le buffer. Pour ce faire, l'organe de contrôle 100 commande le multiplexeur 120 de manière à sélectionner un bloc de bourrage à partir de 140. L'instant (II) correspond au moment où le premier bloc de bourrage vient d'être écrit dans le buffer. Le drapeau AEF est alors mis à 0 par l'organe de contrôle. La fréquence ne peut encore être modifiée car, étant donné le retard à travers le filtre interpolateur 160, des données utiles de D₀ peuvent encore être présentes dans le convertisseur de fréquence 170. Un peu plus tard, en (III), le buffer est à nouveau presque vide et le drapeau AEF est à nouveau levé. L'organe de contrôle 100 commande alors l'écriture d'un second bloc de bourrage DD₁, comme on peut le voir en (IV), puis ordonne au synthétiseur de fréquence 150 de modifier la fréquence porteuse à la valeur f₁. Le drapeau AEF est à nouveau mis à 0. Lorsque (V) le buffer est à nouveau presque vide, on est certain que le synthétiseur s'est stabilisé à la fréquence f₁ et on peut alors écrire (VI) le bloc utile destiné à être transmis à cette fréquence.

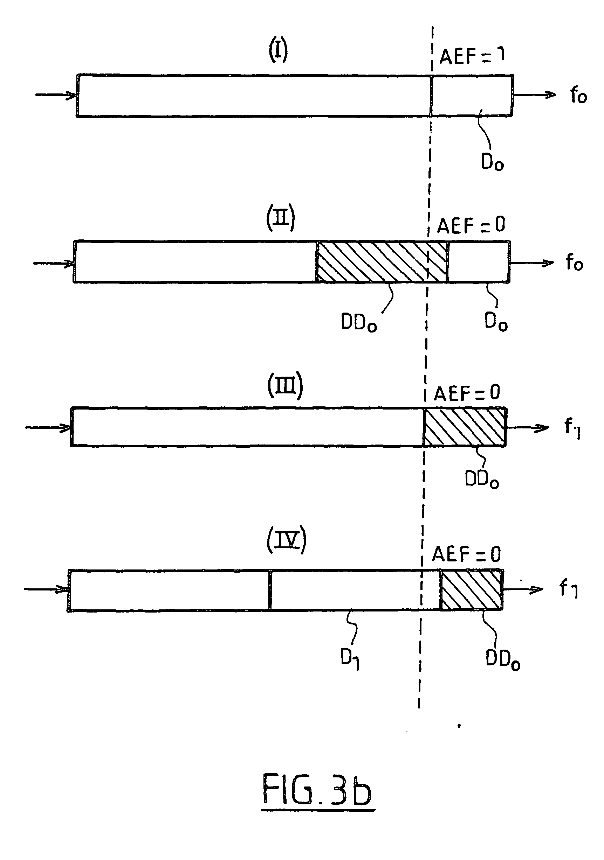

La Fig. 3b illustre une seconde variante de l'invention. L'instant (I) correspond au moment où le drapeau AEF vient de passer à 1. La fin d'un bloc utile D₀ est présente dans le buffer. La fréquence porteuse choisie pour moduler les données du bloc D₀ est f₀. Si l'émetteur a programmé un changement de fréquence pour le bloc utile suivant, un bloc de bourrage DD₀ est alors d'abord écrit (II) dans le buffer. Le drapeau AEF est mis à 0. On notera qu'ici, le seuil de déclenchement de buffer presque vide doit être pris suffisamment élevé et la taille du bloc de bourrage choisie suffisamment grande pour que, d'une part, lorsque le buffer redevient presque vide (III) des données de bourrage se trouvent déjà dans le convertisseur de fréquence 170 et que, d'autre part, le synthétiseur de fréquence ait eu le temps de se stabiliser pendant que des données de bourrage se trouvent encore dans le convertisseur de fréquence. A l'instant (III) la fréquence du synthétiseur est modifiée à la valeur f₁ et le bloc utile à transmettre à cette nouvelle fréquence est écrit dans le buffer (IV).

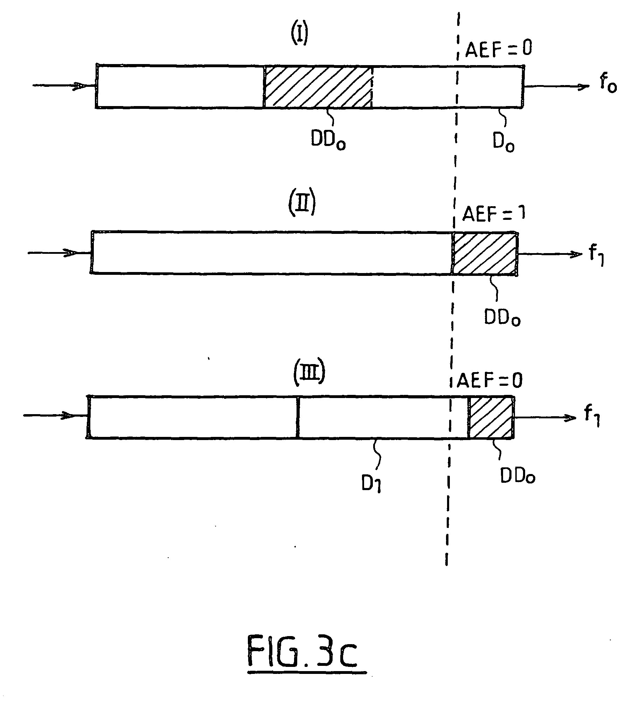

La Fig. 3c illustre une troisième variante de réalisation de l'invention. Cette variante diffère de la précédente en ce que l'on autorise de bloc de données de longueur variable : le bloc de bourrage est alors concaténé comme suffixe au dernier bloc à transmettre à la fréquence f₀. Ici également, la longueur du suffixe et le seuil de déclenchement de buffer presque vide doivent être pris suffisamment élevés pour que des données de bourrage se trouvent dans le convertisseur de fréquence pendant la transition de f₀ à f₁. L'instant (I) montre la lecture du dernier bloc utile à la fréquence f₀. A l'instant (II), le buffer est presque vide et les données de bourrage ont déjà atteint le convertisseur de fréquence : la fréquence est alors modifiée à la valeur f₁. Le nouveau bloc utile à transmettre à cette fréquence est écrit (III) dans le buffer. La concaténation du suffixe est commandée par l'organe de contrôle 100, en actionnant le multiplexeur 120, de manière à permettre l'écriture d'un suffixe de bourrage à la suite des données utiles.

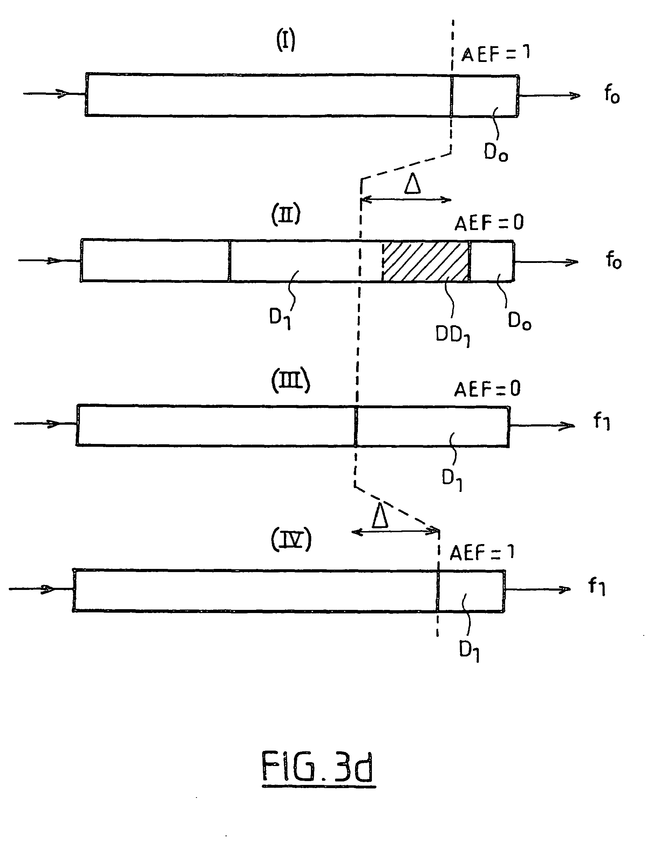

La Fig. 3d montre une quatrième variante de réalisation de l'invention. Cette variante suppose encore que le système autorise le traitement de blocs de longueur variable. Elle diffère néanmoins de la précédente en ce que les données de bourrage ne sont plus concaténées comme suffixe au dernier bloc à transmettre à la fréquence f₀, mais comme préfixe au premier bloc à transmettre à la nouvelle fréquence f₁. L'instant (I) correspond au moment où le drapeau AEF vient de passer à 1. La fin d'un bloc utile D₀ à moduler à la fréquence f₀ est présente dans le buffer. Si l'émetteur a programmé un changement de fréquence pour le bloc utile suivant, l'organe de contrôle 100 commande par le multiplexeur 120 l'écriture d'un préfixe constitué de données de bourrage, suivi des données de ce bloc utile, puis augmente le seuil de déclenchement de buffer presque vide d'une valeur +Δ et met AEF à 0. Lorsque le buffer est à nouveau presque vide (III), l'organe de contrôle 100 modifie la fréquence à la valeur f₁ puis rétablit le seuil de déclenchement de buffer presque vide à sa valeur initiale. Lorsque le buffer est presque vide (IV) en regard de la nouvelle valeur de seuil, l'organe de contrôle commande l'écriture d'un nouveau bloc utile dans le buffer. La valeur Δ et la taille du préfixe doivent être choisies suffisamment élevées pour que, d'une part, lorsque le buffer devient presque vide en regard de valeur de seuil augmentée, les données de bourrage aient déjà atteint le convertisseur de fréquence et, d'autre part, lorsque le buffer redevient presque vide en regard de la valeur de seuil initiale, des données de bourrage se trouvent encore dans le convertisseur de fréquence.

Si l'on considère maintenant la plate-forme radio configurée en récepteur de la Fig. 2, le module d'acquisition remplit le buffer 210 selon le processus cyclique suivant :
- les valeurs I et Q d'un échantillon complexe issu du décimateur sont écrites dans le buffer ;
- si le buffer est presque plein AFF est mis à 1 ;
- on retourne à la première étape.

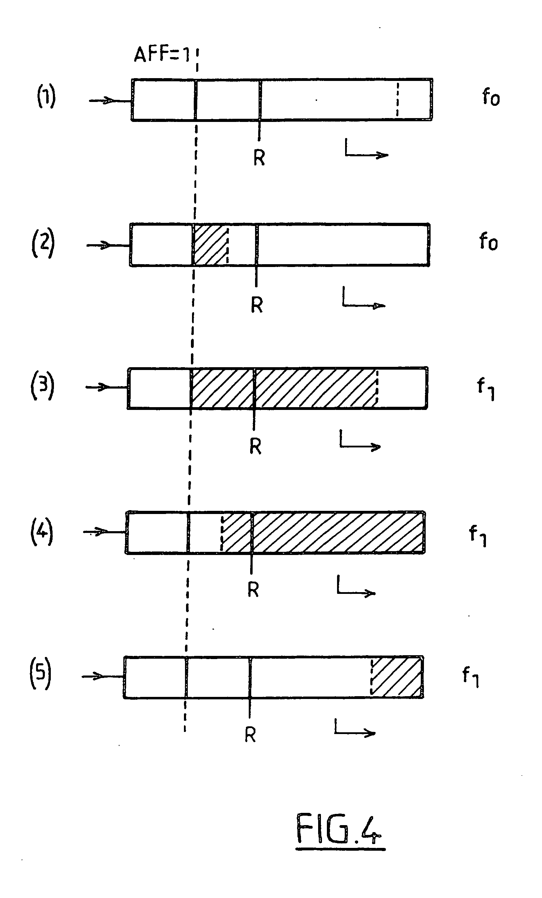

La Fig. 4 montre des contenus possibles du buffer lorsque AFF vient de passer à 1. On a fait figurer en traits interrompus la limite correspondant au seuil de buffer presque plein. Les traits en pointillés à l'intérieur du buffer symbolisent les séparations entre blocs ou entre un bloc et un préfixe/suffixe, telles qu'elles sont présentes à l'émission. La partie du buffer à droite du trait plein (noté R), que nous désignerons par fenêtre de lecture, est lue par le module numérique lorsque AFF=1.

La taille de la fenêtre de lecture est choisie de manière à ce qu'elle ne puisse contenir qu'une seule transition entre données utiles et données de bourrage . Pour ce faire, on choisit une taille de fenêtre inférieure à la longueur d'une séquence de bourrage. Cette dernière sera égale à la somme des longueurs des blocs DD₀ et DD₁ dans le cas de la Fig. 3a, à la longueur du bloc DD₀ dans le cas de la Fig. 3b, à la longueur du suffixe dans la Fig. 3c et à la longueur du préfixe dans la Fig. 3d. On supposera par la suite que la longueur de séquence de bourrage est inférieure à la longueur de bloc utile. Les situations (1) à (5) correspondent, à l'intérieur de la fenêtre de lecture, respectivement à :
- une transition entre blocs utiles ;
- aucune transition n'est observée, toutes les données de la fenêtre sont utiles ;
- une transition entre données utiles et données de bourrage, par exemple entre bloc utile et bloc de bourrage ou entre données utiles et suffixe de bourrage ;
- données de bourrage seules (bloc ou suffixe/préfixe de bourrage) ;
- une transition entre données de bourrage et données utiles, par exemple entre bloc de bourrage et bloc utile ou préfixe de bourrage et données utiles.

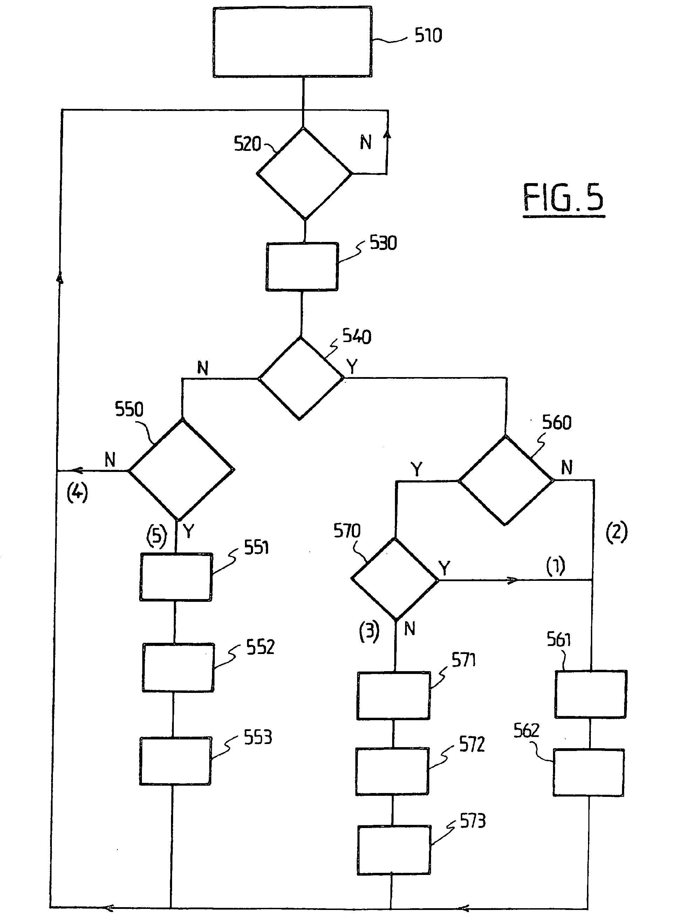

La Fig. 5 représente l'organigramme du procédé de vidage du buffer 210 et de récupération des données utiles. On supposera que chaque bloc utile débute par une séquence particulière aisément détectable (par exemple, au moyen d'une corrélation) permettant de le différencier d'un bloc de bourrage.

L'étape 510 symbolise l'initialisation du procédé : la longueur restante de bloc utile, r, est initialisée à L, longueur de bloc utile. Une boucle de test sur la valeur du drapeau AFF est ensuite effectuée en 520. Dès que AFF=1 (buffer presque rempli), les données contenues dans la fenêtre de lecture sont lues en 530 et le drapeau AFF est mis à 0. On teste en 540 si un bloc utile était en cours de réception : pour ce faire, on compare la longueur restante de bloc utile, r, à la longueur de bloc utile L. Si r<L, cela signifie que la suite d'un bloc utile est attendue, sinon (r=L), on attend un nouveau bloc utile.

Si r=L, on teste en 550 si le module 220 a détecté le début d'un bloc utile. Dans la négative, on se trouve dans le cas (4) de la Fig. 4 et l'on retourne à la boucle de test de AFF. En revanche, dans l'affirmative, on se trouve dans le cas (5) de la Fig. 4 et l'organe de contrôle 200 commande, en 551, au module 220 la recherche de la première donnée utile. Un pointeur sur cette première donnée est déterminé. Les données utiles sont traitées en 552 à partir de la valeur du pointeur. La longueur restante r est mise à jour en 553. Enfin, on retourne à la boucle de test de AFF.

Si r<L, on, teste en 560 si r<R où R est la taille de la fenêtre de lecture. Dans la négative, on se trouve dans le cas (2) de la Fig. 4 : toutes les données sont par conséquent utiles et sont traitées en 561. On met ensuite à jour la valeur de r en 562. En revanche, lorsque r<R, on teste en 570 si le module 220 a détecté le début d'un bloc utile :
- dans l'affirmative, on se trouve dans la situation (1) de la Fig. 4. Toutes les données lues sont utiles et l'on passe à l'étape 561 de traitement des données lues puis à la mise à jour de r en 562. Enfin, on retourne à la boucle de test de AFF.
- dans la négative, on se trouve dans la situation (3) de la Fig. 4. L'organe de contrôle 200 ordonne, en 571, au synthétiseur 250 de modifier sa fréquence. La modification de fréquence intervient alors que des données de bourrage sont encore présentes dans le convertisseur de fréquence 270. Les r données utiles restantes sont traitées en 572 et la valeur r est réinitialisée à L en 573. En dernier lieu, on retourne à la boucle de test de AFF.

On remarque que ce procédé ne nécessite une recherche de début de bloc utile qu'après un changement de fréquence car le système suit en permanence la valeur de longueur restante de bloc utile, r. Si aucune transition de bloc utile n'est détectée alors que r est inférieur à la largeur R de la fenêtre de lecture, un saut de fréquence doit être effectué.

## Revendications

1. Procédé de transmission de données se présentant sous la forme d'une suite de blocs, chaque bloc de données étant soumis à une conversion de fréquence pour être transmis à une fréquence porteuse, **caractérisé en ce** lorsqu'un premier bloc de données destiné à être transmis à une première fréquence porteuse est suivi d'un second bloc de données destiné à être transmis à une seconde fréquence porteuse, l'on insère une séquence de données de bourrage entre le premier bloc et le second bloc et que la conversion de fréquence passe d'une conversion à la première fréquence porteuse à une conversion à la seconde fréquence porteuse lorsque ladite conversion de fréquence opère sur lesdites données de bourrage.

2. Procédé selon la revendication 1, **caractérisé en ce que** les données de bourrage sont insérées sous la forme d'un bloc de bourrage entre lesdits premier et second blocs.

3. Procédé selon la revendication 1, **caractérisé en ce que** les données de bourrage sont concaténées, comme suffixe, au premier bloc.

4. Procédé selon la revendication 1, **caractérisé en ce que** les données de bourrage sont concaténées, comme préfixe, au second bloc.

5. Procédé selon l'une des revendications précédentes, **caractérisé en ce qu'**il comprend un premier processus d'écriture dans un buffer (110) de type FIFO et un second processus de lecture de ce buffer, le premier et le second processus opérant de manière asynchrone.

6. Procédé selon la revendication 5, **caractérisé en ce que** le premier processus écrit un bloc de données lorsqu'un drapeau (AEF) indique que le buffer est presque vide, puis change la valeur du drapeau et recommence.

7. Procédé selon la revendication 6, **caractérisé en ce que** le second processus lit une donnée du buffer, lève ledit drapeau si le buffer est presque vide, puis recommence.

8. Procédé selon les revendications 2 et 6, **caractérisé en ce qu'**un bloc de données de bourrage est écrit dans le buffer si le bloc suivant doit être transmis à une fréquence porteuse différente de la fréquence porteuse courante.

9. Procédé selon les revendications 3 et 6, **caractérisé en ce qu'**un suffixe de bourrage est concaténé au bloc précédant le premier bloc devant être transmis à une fréquence porteuse différente de la fréquence porteuse courante et que le bloc ainsi concaténé est écrit dans le buffer.

10. Procédé selon les revendications 4 et 6, **caractérisé en ce qu'**un préfixe de bourrage est concaténé à un bloc de données si celui-ci doit être transmis à une fréquence porteuse différente de la fréquence porteuse courante .

11. Dispositif d'émission adapté à transmettre des données se présentant sous la forme d'une suite de blocs, **caractérisé en ce qu'**il comprend des moyens adaptés pour mettre en oeuvre le procédé selon l'une des revendications précédentes.

12. Dispositif d'émission selon la revendication 11, **caractérisé en ce qu'**il comprend un buffer de type FIFO (110) adapté à recevoir des blocs de données à transmettre, un convertisseur de fréquence (170) adapté à transposer les données lues dudit buffer à une fréquence porteuse, un synthétiseur de fréquence (150) fournissant une horloge à la fréquence porteuse audit convertisseur (170), des moyens (120) d'insertion de données de bourrage, un organe de contrôle (100) adapté à commander aux dits moyens d'insertion d'insérer des données de bourrage entre deux blocs de données à transmettre et à commander au synthétiseur de fréquence un changement de fréquence porteuse.

13. Procédé de réception de données émises par un dispositif d'émission à sauts de fréquence et se présentant sous la forme d'une suite de blocs, chaque bloc ayant été transmis à une fréquence porteuse étant converti en bande de base au moyen d'une conversion de fréquence, un premier bloc de données, dites utiles, transmis à une première fréquence porteuse, étant séparé d'un second bloc de données utiles, transmis à une seconde fréquence porteuse, par une séquence de données de bourrage, **caractérisé en ce que** l'on détecte à la réception une transition entre données utiles et données de bourrage et que, si une telle transition est détectée, la conversion de fréquence passe d'une conversion à partir de la première fréquence porteuse à une conversion à partir de la seconde fréquence porteuse lorsque ladite conversion de fréquence opère sur lesdites données de bourrage.

14. Procédé selon la revendication 13, **caractérisé en ce qu'**il comprend un premier processus d'écriture dans un buffer de type FIFO et un second processus de lecture de ce buffer, le premier et le second processus opérant de manière asynchrone.

15. Procédé selon la revendication 14, **caractérisé en ce que** le premier processus lève un drapeau (AFF) lorsque le buffer est presque plein, puis recommence.

16. Procédé selon la revendication 15, **caractérisé en ce que** le second processus lit un bloc de données lorsque ledit drapeau indique que le buffer est presque plein, change la valeur du drapeau, puis recommence.

17. Procédé selon l'une des revendications 13 à 16, **caractérisé en ce que** le second processus détermine le début du second bloc utile après avoir détecté une transition entre données utiles et données de bourrage et met à jour à chaque lecture suivante, la longueur du bloc utile courant restant à lire.

18. Dispositif de réception adapté à recevoir des données émises par un dispositif d'émission à sauts de fréquence et se présentant sous la forme de blocs de données utiles, entrecoupés ou non par des séquences de données de bourrage, **caractérisé en ce qu'**il comprend des moyens adaptés pour mettre en oeuvre le procédé selon l'une des revendications 13 à 17.

19. Dispositif de réception selon la revendication 18, **caractérisé en ce qu'**il comprend un buffer de type FIFO (210) adapté à recevoir lesdites données, un convertisseur de fréquence (270) opérant à une fréquence de travail et adapté à convertir les données lues dudit buffer en un signal en bande de base, un synthétiseur de fréquence (250) fournissant audit convertisseur de fréquence un signal à ladite fréquence de travail, des moyens (220) adaptés à détecter une transition entre données utiles et données de bourrage et un organe de contrôle (200) adapté à commander audit synthétiseur de fréquence un changement de la fréquence de travail lorsqu'une telle transition est détectée.

## Claims

1. Method of transmitting data in the form of a series of blocks, each block of data being subjected to a frequency conversion in order to be transmitted at a carrier frequency, **characterised in that**, when a first block of data intended to be transmitted at a first carrier frequency is followed by a second block of data intended to be transmitted at a second carrier frequency, a sequence of padding data is inserted between the first block and the second block, and **in that** the frequency conversion passes from a conversion to the first carrier frequency to a conversion to the second carrier frequency when said frequency conversion operates on said padding data.

2. Method according to claim 1, **characterised in that** the padding data are inserted in the form of a padding block between said first and second blocks.

3. Method according to claim 1, **characterised in that** the padding data are concatenated, as a suffix, with the first block.

4. Method according to claim 1, **characterised in that** the padding data are concatenated, as a prefix, with the second block.

5. Method according to one of the preceding claims, **characterised in that** it comprises a first process of writing into a buffer (110) of the FIFO type and a second process of reading from this buffer, the first and second processes operating asynchronously.

6. Method according to claim 5, **characterised in that** the first process writes a block of data when a flag (AEF) indicates that the buffer is almost empty, then changes the value of the flag and recommences.

7. Method according to claim 6, **characterised in that** the second process reads a data item from the buffer, removes said flag if the buffer is almost empty, then recommences.

8. Method according to claims 2 and 6, **characterised in that** a block of padding data is written into the buffer if the following block is to be transmitted at a carrier frequency different from the current carrier frequency.

9. Method according to claims 3 and 6, **characterised in that** a padding suffix is concatenated with the block preceding the first block to be transmitted at a carrier frequency different from the current carrier frequency and **in that** the block thus concatenated is written into the buffer.

10. Method according to claims 4 and 6, **characterised in that** a padding prefix is concatenated with a block of data if the latter is to be transmitted at a carrier frequency different from the current carrier frequency.

11. Transmission device adapted to transmit data in the form of a series of blocks, **characterised in that** it comprises means adapted for implementing the method according to one of the preceding claims.

12. Transmission device according to claim 11, **characterised in that** it comprises a buffer of the FIFO type (110) adapted to receive blocks of data to be transmitted, a frequency converter (170) adapted to transpose the data read from said buffer at a carrier frequency, a frequency synthesiser (150) supplying a clock at the carrier frequency to said converter (170), means (120) of inserting padding data, a control device (100) adapted to command said insertion means to insert padding data between two blocks of data to be transmitted and to command the frequency synthesiser to change the carrier frequency.

13. Method of receiving data transmitted by a transmission device with frequency hopping and in the form of a series of blocks, each block having been transmitted at a carrier frequency being converted into baseband by means of a frequency conversion, a first block of so-called useful data, transmitted at a first carrier frequency, being separated from a second block of useful data, transmitted at a second carrier frequency, by a sequence of padding data, **characterised in that**, on reception, a transition between useful data and padding data is detected and **in that**, if such a transition is detected, the frequency conversion passes from a conversion from the first carrier frequency to a conversion from the second carrier frequency when said frequency conversion operates on said padding data.

14. Method according to claim 13, **characterised in that** it comprises a first process of writing into a buffer of the FIFO type and a second process of reading from this buffer, the first and the second processes operating asynchronously.

15. Method according to claim 14, **characterised in that** the first process removes a flag (AFF) when the buffer is almost full, then recommences.

16. Method according to claim 15, **characterised in that** the second process reads a block of data when said flag indicates that the buffer is almost full, changes the value of the flag, then recommences.

17. Method according to one of claims 13 to 16, **characterised in that** the second process determines the start of the second useful block after having detected a transition between useful data and padding data and updates, at each following reading, the length of the current useful block remaining to be read.

18. Reception device adapted to receive data transmitted by a transmission device with frequency hopping and in the form of blocks of useful data, interspersed or not with sequences of padding data, **characterised in that** it comprises means adapted for implementing the method according to one of claims 13 to 17.

19. Reception device according to claim 18, **characterised in that** it comprises a buffer of the FIFO (210) type adapted to receive said data, a frequency converter (270) operating at a working frequency and adapted to convert the data read from said buffer into a baseband signal, a frequency synthesiser (250) supplying to said frequency converter a signal at said working frequency, means (220) adapted to detect a transition between useful data and padding data and a control device (200) adapted to command said frequency synthesiser to change the working frequency when such a transition is detected.

## Patentansprüche

1. Verfahren zum Übertragen bzw. Senden von Daten, die in der Form einer Reihe von Blöcken vorliegen, wobei jeder Datenblock zur Übertragung auf einer Trägerfrequenz einer Frequenzumwandlung unterzogen wird, **dadurch gekennzeichnet, dass**, wenn auf einen ersten Datenblock, der zur Übertragung auf einer ersten Trägerfrequenz bestimmt ist, ein zweiter Datenblock folgt, der zur Übertragung auf einer zweiten Trägerfrequenz bestimmt ist, zwischen dem ersten Block und dem zweiten Block eine Fülldatenabfolge eingefügt wird und die Frequenzumwandlung von einer Umwandlung auf die erste Trägerfrequenz zu einer Umwandlung auf die zweite Trägerfrequenz übergeht, wenn die Frequenzumwandlung bei den Fülldaten zur Wirkung gelangt.

2. Verfahren nach Anspruch 1, **dadurch gekennzeichnet, dass** die Fülldaten in der Form eines Füllblocks zwischen den ersten und den zweiten Block eingefügt werden.

3. Verfahren nach Anspruch 1, **dadurch gekennzeichnet, dass** die Fülldaten als Suffix an den ersten Block angehängt werden.

4. Verfahren nach Anspruch 1, **dadurch gekennzeichnet, dass** die Fülldaten als Präfix an den zweiten Block angehängt werden.

5. Verfahren nach einem der vorhergehenden Ansprüche, **dadurch gekennzeichnet, dass** es einen ersten Prozess zum Schreiben in einen Zwischenspeicher (110) in Form eines FIFO-Speichers und einen zweiten Prozess zum Leseen aus dem Zwischenspeicher umfasst, wobei der erste und der zweite Prozess asynchron betrieben werden.

6. Verfahren nach Anspruch 5, **dadurch gekennzeichnet, dass** der erste Prozess einen Datenblock schreibt, wenn ein Feld (AEF) anzeigt, dass der Zwischenspeicher beinahe leer ist, dann den Wert des Felds ändert und wieder beginnt.

7. Verfahren nach Anspruch 6, **dadurch gekennzeichnet, dass** der zweite Prozess Daten aus dem Zwischenspeicher liest, das Feld beseitigt, wenn der Zwischenspeicher beinahe leer ist, und wieder beginnt.

8. Verfahren nach den Ansprüchen 2 und 6, **dadurch gekennzeichnet, dass** ein Fülldatenblock in den Zwischenspeicher geschrieben wird, wenn der folgende Block auf einer anderen als der aktuellen Trägerfrequenz übertragen werden muss.

9. Verfahren nach den Ansprüchen 3 und 6, **dadurch gekennzeichnet, dass** ein Füllsuffix an den Block angehängt wird, der dem ersten Block vorangeht, bevor er auf einer anderen als der aktuellen Trägerfrequenz übertragen wird, und der so mit einem Anhang versehene Block in den Zwischenspeicher geschrieben wird.

10. Verfahren nach den Ansprüchen 4 und 6, **dadurch gekennzeichnet, dass** ein Füllpräfix an einen Datenblock angehängt wird, wenn dieser auf einer anderen als der aktuellen Trägerfrequenz übertragen werden muss.

11. Sendevorrichtung, die zur Übertragung von Daten geeignet ist, die in der Form einer Reihe von Blöcken vorliegen, **dadurch gekennzeichnet, dass** sie Mittel umfasst, die zur Umsetzung des Verfahrens gemäß den vorhergehenden Ansprüchen geeignet sind.

12. Sendevorrichtung nach Anspruch 11, **dadurch gekennzeichnet, dass** sie Folgendes umfasst: einen Zwischenspeicher in der Form eines FIFO-Speichers (110), der zur Aufnahme der zu übertragenden Datenblöcke geeignet ist, einen Frequenzwandler (170), der zum Umwandeln der aus dem Zwischenspeicher gelesenen Daten in eine Trägerfrequenz geeignet ist, einen Frequenzerzeuger (150), der die Trägerfrequenz bei dem Umwandler (170) mit einer Zeitangabe versieht, Mittel (120) zum Einfügen der Fülldaten, ein Steuerorgan (100), das dazu geeignet ist, den Einfügemitteln zu befehlen, die Fülldaten zwischen die beiden zu übertragenden Datenblöcke einzufügen, und dazu, dem Frequenzerzeuger eine Änderung der Trägerfrequenz zu befehlen.

13. Verfahren zum Empfangen von Daten, die in Frequenzsprüngen durch eine Sendevorrichtung ausgegeben wurden und in der Form einer Reihe von Blöcken vorliegen, wobei jeder Block auf einer Trägerfrequenz übertragen wird, die im Basisband mittels eines Frequenzwandlermittels umgewandelt wird, wobei ein erster Block von Nutzdaten genannten Daten, der auf einer ersten Trägerfrequenz übertragen wird, von einem zweiten Block von Nutzdaten, der auf einer zweiten Trägerfrequenz übertragen wird, durch eine Reihe von Fülldaten getrennt wird, **dadurch gekennzeichnet, dass** beim Empfang ein Übergang zwischen den Nutzdaten und den Fülldaten erfasst wird und dass, wenn ein solcher Übergang erfasst wurde, die Frequenzumwandlung von einer Umwandlung von der ersten Trägerfrequenz zu einer Umwandlung von der zweiten Trägerfrequenz übergeht, wenn die Frequenzumwandlung bei den Fülldaten zur Wirkung gelangt.

14. Verfahren nach Anspruch 13, **dadurch gekennzeichnet, dass** es einen ersten Prozess zum Schreiben in den Zwischenspeicher in Form eines FIFO-Speichers und einen zweiten Prozess zum Lesen aus dem Zwischenspeicher umfasst, wobei der erste und zweite Prozess asynchron betrieben werden.

15. Verfahren nach Anspruch 14, **dadurch gekennzeichnet, dass** der erste Prozess ein Feld (AFF) beseitigt, wenn der Zwischenspeicher beinahe voll ist, und dann wieder beginnt.

16. Verfahren nach Anspruch 15, **dadurch gekennzeichnet, dass** der zweite Prozess einen Datenblock liest, wenn das Feld anzeigt, dass der Puffer beinahe voll ist, den Wert des Felds ändert und dann wieder beginnt.

17. Verfahren nach den Ansprüchen 13 bis 16, **dadurch gekennzeichnet, dass** der zweite Prozess den Anfang des zweiten Nutzblocks bestimmt, nachdem er einen Übergang zwischen Nutzdaten und Fülldaten erfasst hat, und bei jedem folgenden Lesen die Länge des aktuellen zu lesenden Nutzblocks aktualisiert.

18. Empfangsvorrichtung, die dazu geeignet ist, die durch eine Sendevorrichtung mit Frequenzsprüngen ausgegebenen Daten, die in der Form von Blöcken aus Nutzdaten vorliegen und durch Reihen von Fülldaten unterbrochen werden oder nicht, zu empfangen, **dadurch gekennzeichnet, dass** sie Mittel umfasst, die zur Umsetzung des Verfahrens gemäß eines der Ansprüche 13 bis 17 geeignet sind.

19. Empfangsvorrichtung nach Anspruch 18, **dadurch gekennzeichnet, dass** sie Folgendes umfasst: einen Zwischenspeicher in Form eines FIFO-Speichers, der zum Empfangen der Daten geeignet ist, einen Frequenzumwandler (270), der bei einer Betriebsfrequenz arbeitet und geeignet ist, die aus dem Zwischenspeicher gelesenen Daten in ein Basisbandsignal umzuwandeln, einen Frequenzerzeuger (250), der dem Frequenzwandler ein Signal bei der Betriebsfrequenz bereitstellt, Mittel (220), die zum Erfassen eines Übergangs zwischen Nutzdaten und Fülldaten geeignet sind, und ein Steuerorgan (200), das dazu geeignet ist, dem Frequenzerzeuger eine Änderung der Betriebsfrequenz zu befehlen, wenn ein solcher Übergang erfasst wurde.
